Europäisches Patentamt

European Patent Office

Office européen des brevets

(11) Publication number: **0 405 717 A1**

## EUROPEAN PATENT APPLICATION

(21) Application number: 90304280.2

(22) Date of filing: 20.04.90

(51) Int. Cl.⁵: **B60K 17/346, F16H 1/44**

(30) Priority: 30.06.89 GB 8915080
30.06.89 GB 8915079

(43) Date of publication of application:
02.01.91 Bulletin 91/01

(84) Designated Contracting States:
AT DE ES FR GB IT NL SE

(71) Applicant: ROVER GROUP LIMITED
Fletchamstead Highway
Canley Coventry CV4 9DB(GB)

(72) Inventor: **Player, John R.**
52 Sedgemoor Road
Coventry CV3 4EB(GB)
Inventor: **Holme, Harold R.**
Spencer House, Cawnsall Road
Cawnsall, Nr. Kidderminster DY11 5YL(GB)

(74) Representative: **Burrage, David John et al**
The Rover Group plc Patent & Trademark
Department Cowley Body Plant Cowleyley
GB-Oxford OX4 5NL(GB)

(54) A rotary transmission.

(57) The rotary transmission comprises an epicyclic gearing 20 having a planet wheel carrier 19 for drive input and annulus and sun gears 22, 23 providing drive outputs. Normally the drive outputs will rotate in synchronism. A control device 27 is provided including a first part 21 drivable by the epicyclic gearing 20. The first part 21 remains in a first operative condition during synchronous rotation of the outputs and changes to a different operative condition if loss of synchronism occurs. The control device also includes a second part 31 for co-operation with the first part for restoring the synchronous rotation of the outputs.

FIG.1

# A ROTARY TRANSMISSION

The invention relates to a rotary transmission and is particulary, but not exclusively, concerned with a rotary transmission suitable for use in a four wheel drive motor vehicle.

In particular the invention relates to a rotary epicyclic transmission having a drive input member and first and second drive output members and an object of certain aspects of the present invention is to provide a transmission which enables synchronism between the drive output members to be restored where loss of synchronism occurs.

According to a first aspect of the invention there is provided a rotary transmission comprising an epicyclic transmission having a drive input member, first and second drive output members rotatable in synchronism, and a control device including a first part drivable by the epicyclic transmission and which remains in a first operative condition during synchronous rotation of the drive output members and changes to a different operative condition where loss of synchronism or substantial loss of synchronism occurs, and a second part for controlling the first part to enable the synchronous rotation of the outputs to be restored, the first part of the control device including a control element which is driven by an element of the epicyclic transmission.

Such a rotary transmission provides a simple yet effective means of enabling synchronism between the output members to be restored.

One output member may comprise or be drivably connected to an annulus gear of the epicyclic transmission. Another output member may comprise or be drivably connected to a sun gear of the epicyclic transmission.

Preferably the element of the epicyclic transmission is a planet gear and the control gear preferably meshes with the planet gear.

In one embodiment the planet gear meshes with a further planet gear in mesh with a sun gear and an annulus gear of the epicyclic transmission.
In that way a straightforward epicyclic gearing can be utilised which can easily accommodate the planet gear in mesh with the control gear.

The control gear is preferably coaxial with the sun gear and effectively comprises a second sun gear. Thus the epicyclic transmission can provide a drive which is divided between the output members and which is controllable through a control gear in the form of a second sun gear.

In a further embodiment the epicyclic transmission is of a compound planet gear type in which the compound planet gear has an axis of rotation transverse to the axis of a gear in mesh therewith. In such a case the control gear may mesh with one of the gears of the compound planet gear.

Preferably, the control gear of the first part of the control device is coaxial with an output of the epicyclic transmission. Such an arrangement provides an overall compact rotary transmission.

Preferably, the outputs are provided by the sun gear and annulus gear of the epicyclic transmission.

Preferably, the first operative condition of the first part of the control device is a substantially non-rotating condition and the second operative condition of the first part of the control device may be a rotating condition. In that way it becomes relatively easy to sense loss or substantial loss of synchronism.

The second part of the control device for restoring the first part of the control device to its first operative condition may be a brake, clutch, viscous coupling or like arresting means.

The arresting means is preferably mounted on a casing for the epicyclic gearing or other stationary mounting. Such an arrangement is particularly useful as it is relatively straightforward to mount arresting means on a stationary mounting rather than, say, on a rotary component.

In modern high-powered cars it has become fashionable to use front wheel drive. However, where all the torque from a prime mover is applied through the front drive wheels, handling problems can arise. Four wheel drive vehicles help to overcome that particular problem as the torque is split between the front and rear wheels. However, the cost of developing a four wheel drive vehicle can be extremely high.

An object of other aspects of the present invention is to enable a four wheel drive vehicle to be provided with minimum redesign and which can utilise standard final drive components used in normal front wheel drive vehicles and standard final drive components for use in normal rear-wheel drive vehicles.

According to a second aspect of the invention there is provided a rotary drive transmission for a vehicle having a prime mover and a change speed transmission through which drive is transmitted to forward and rearward pairs of wheels of the vehicle, the drive transmission comprising an epicyclic transmission having a drive input member which receives drive from the change speed transmission a first drive output member for providing drive output at one speed to a first final drive unit to drive one pair of wheels and a second drive output member for providing drive output at a different speed to a second final drive unit having a ratio different from the first final drive unit to drive another pair of wheels.

According to a third aspect of the invention there is provided a method of providing a rotary drive transmission to forward and rearward pairs of wheels of a vehicle comprising providing a change speed transmission designed for two-wheel drive and a particular range of driving conditions and which normally transmits drive directly to a final drive unit for one pair of wheels, interposing an epicyclic transmission between the change speed transmission and the final drive unit, so that a drive input member of the epicyclic transmission reoeives drive from the change speed transmission, a first drive output member of the epicyclic transmission transmits drive to the final drive unit to provide a drive ratio between the change-speed transmission and the final drive unit different from unity, and a second drive output member of the epicyclic gearing provides drive to a second final drive unit associated with another pair of the wheels of the vehicle thereby providing an all wheel drive suitable for a different range of driving conditions.

With arrangements in accordance with either of the second and third aspects of the invention it is possible to utilise the engine, change-speed transmission and final drive unit of an existing two-wheel drive vehicle designed, say, for on-highway use, and by the addition of a simple epicyclic transmission and a second final drive unit of appropriate ratio to produce not only an all-wheel drive vehicle but one in which the overall ratio may be a reduction ratio lower than that attainable by driving the first final drive unit directly from the change speed transmission. The arrangement thereby enables the existing engine and change-speed transmission to accommodate, say, off-highway driving conditions. Therefore an all-wheel drive vehicle suitable for off-highway driving conditions can be produced without having to develop an alternative change-speed transmission.

The first and second drive outputs will generally rotate substantially in synchronism when the vehicle is travelling normally along the road. Therefore, a rotary transmission in accordance with the first aspect of the invention or any of the consistory clauses related thereto can be used as the rotary drive transmission in the aforesaid second and third aspects of the invention. If rotary speed of a wheel of the vehicle increases in speed due to loss of traction, synchronism between the drive output members will be lost along with drive to the remaining wheels. However, operation of the aforesaid control device will enable synchronism to be restored.

According to a fourth aspect of the invention there is provided a rotary drive transmission for a vehicle having a prime mover and a change speed transmission through which drive is transmitted to forward and rearward pairs of wheels of the vehicle, the rotary drive transmission comprising an epicyclic transmission having a drive input member which receives drive from the change speed transmission, a first drive output member for providing drive output at one speed to a first final drive unit to drive one pair of wheels, a second drive output member for providing drive output at a different speed to a second final drive unit to drive another pair of wheels, and a control device including a first part drivable by the epicyclic transmission and which remains in a first operative condition during synchronous rotation of the drive output members and changes to a different operative condition where loss of synchronism or substantial loss of synchronism occurs, and a second part for controlling the first part to enable the synchronous rotation of the outputs to be restored.

Preferably, the first part of the control device includes a control element which is driven by an element of the epicyclic transmission.

According to a fifth aspect of the invention there is provided a method of providing a drive transmission to forward and rearward pairs of wheels of a vehicle comprising providing a change speed transmission designed for two-wheel drive and a particular range of driving conditions and which normally transmits drive directly to a final drive unit for one pair of wheels, interposing a rotary drive transmission including an epicyclic transmission between the change speed transmission and the final drive unit so that a first drive output member of the epicyclic transmission transmits drive to the final drive unit to provide a drive ratio between the change speed transmission and the final drive unit different from unity, and a second drive output member of the epicyclic gearing provides drive to a second final drive unit associated with another pair of the wheels of the vehicle thereby providing an all wheel drive suitable for a different range of driving conditions, and providing a control device for restoring synchronism between the drive output members where loss of synchronism or substantial loss of synchronism occurs, the control device including a first part drivable by the epicyclic transmission and which remains in a first operative condition during synchronous rotation of the drive output members and changes to a different operative condition where loss of synchronism or substantial loss of synchronism occurs, and a second part for controlling the first part to enable the synchronous rotation of the outputs to be restored, the first part of the control device including a control element which is driven by an element of the epicyclic transmission.

Preferably, the second final drive unit has a ratio which is sufficiently low to compensate for drive at an overdrive ratio transmitted from the second output of the epicyclic transmission thereby providing an overall ratio between the change speed transmission and the wheels which is different from the ratio which would exist between the change-speed transmission and the wheels if the first final drive unit were driven directly by the change-speed transmission.

The vehicle may be required both for on-highway or off-highway use and selector means may be provided for optionally providing drive to the forward and rearward pairs of wheels or drive to one pair of wheels only.

Preferably drive to one pair of wheels is at a higher ratio than drive to both pairs of wheels. In that way, drive at the higher ratio through one pair of wheels can be used when the vehicle is being driven on-highway.

The selector means is preferably arranged to selectively interconnect or disconnect elements of the epicyclic transmission. Where the elements are interconnected by the selector means, the selector means preferably prevents relative rotation between the elements.

The epicyclic transmission in any of the aforesaid aspects of the invention may be of the kind including sun and annulus gears having a common axis with a planet gear therebetween on a planet gear carrier and rotatable about an axis parallel with the common axis. Drive from the change-speed transmission is preferably transmitted to the planet gear carrier and the drive outputs from the epicyclic gearing are then taken from the annulus gear and sun gear respectively. By providing drive input to the planet gear carrier, gear tooth loading is kept to a minimum and the use of such an epicyclic gearing can provide coaxial outputs for driving the wheels on the front and rear axles thereby providing a convenient and compact arrangement.

Where the aforesaid selector means is provided, the selector means may optionally drivably interconnect the change speed transmission to the planet wheel carrier, or drivably interconnect the annulus or sun gear or both to the change-speed transmission part to provide a direct drive.

In an alternative arrangement the transmission may be a compound epicyclic gearing having a compound planet gear rotatable about an axis transverse to a common axis of rotation of gears meshing therewith. In such a case the epicyclic transmission may be a compound bevel epicyclic gearing. Preferably drive from the change-speed transmission is transmitted to a gear in mesh with a first gear of the compound planet gear, and drive outputs from the epicyclic gearing are then taken from a carrier for the compound planet gear and from another gear in mesh with a second gear of the compound planet gear.

With transmissions in accordance with the invention, the use of the control device enables the transmission to be changed from a two output differential action transmission to a two output fixed ratio transmission where substantial loss of synchronism occurs.

The change-speed transmission may transmit drive to the epicyclic transmission through an intermediate transmission means which may provide a reduction ratio.

Transmissions in accordance with the invention will now be described by way of example with reference to the accompanying drawings in which:-

Fig.1 is diagrammatic cross section through a transmission in accordance with the invention for use in a four wheel drive vehicle,

Fig.2 is a diagrammatic end view of an epicyclic transmission shown in Fig.1,

Fig.3 is a diagrammatic cross section through a compound bevel epicyclic transmission in accordance with the invention for use in a four wheel drive vehicle,

Fig.4 is a diagrammatic representation of a further form of transmission in accordance with the invention,

Fig.5 is a diagrammatic representation of a modified version of the transmission shown in Fig.4 incorporating a selector,

Fig.6 is a diagrammatic representation of a compound bevel transmission in accordance with the invention, and

Fig.7 is a diagrammatic representation of a modified version of the transmission of Fig.6 incorporating a selector.

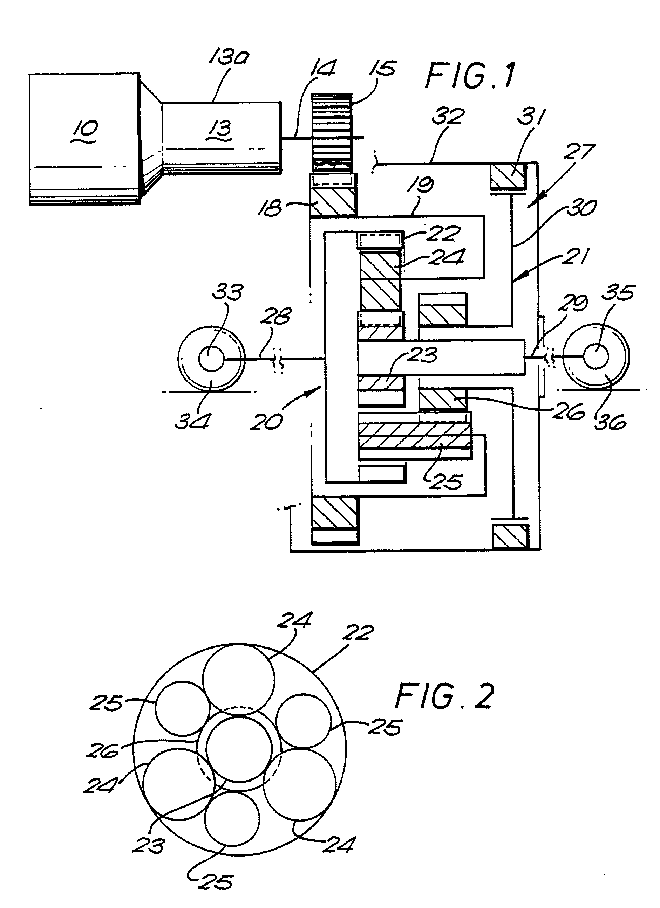

In Fig.1, an engine 10 transmits drive to a change speed transmission 13. The transmission 13 drives an output shaft 14 which is drivably connected to a gear wheel 15. The gear wheel 15 meshes with a gear wheel 18 drivably connected to a planet gear carrier 19 of an epicyclic transmission 20. The epicyclic transmission includes an annulus gear 22, a sun gear 23 and a number of planet gears 24 in mesh with the annulus and sun gears. The planet gear carrier 19 rotatably supports a number of further planet gears 25 meshing with respective planet gears 24. The planet gears 25 mesh with a control gear 26 of a control device 27. The control device 27 includes a first part 21 comprising the control gear 26 and a member 30 drivably connected to the control gear 26, and a second part 31 co-operable with the member 30. The first part 21 is mounted for rotation coaxially with the sun gear 23 and the second part 31 is mounted on a casing 32 (part only of which is shown) of the epicyclic transmission 20. Conveniently the casing 32 may be mounted on the output end of a casing 13a for the change speed gearing 13.

The annulus gear 22 drives a propeller shaft 28 drivably connected to a final drive unit 33 for front wheels 34 of the vehicle and the sun gear 23 drives a propeller shaft 29 drivably connected to a further final drive unit 35 for rear wheels 36 of the vehicle. The final drive units have different ratios and when the wheels are in engagement with the road, the road effectively provides a common reaction for the epicyclic transmission 20 thereby requiring drive to be transmitted at one speed through the propeller shaft 28 and at a different speed to the propeller shaft 29.

The engine 10, change speed transmission 13 and final drive unit 33 are those which would normally be used in the vehicle to provide a two wheel drive suitable, say for on-highway driving conditions. To enable the same engine 10, change speed transmission 13 and final drive unit 33 to be retained, the final drive unit 35 has a ratio lower than that of the final drive unit 33. The combined effect of the ratios in the final drive unit 33, the epicyclic gearing 20 and the final drive unit 35 is to provide an overall ratio between the change-speed transmission 13 and the wheels 34, 36 lower than that attainable in the original two wheel drive arrangement where the final drive unit 33 was driven directly from the change-speed transmission 13. Normally the effect of the epicyclic gearing 20 is to drive the propeller shaft 29 at an overdrive rate. To compensate for that, the ratio provided in the final drive unit 35 is sufficiently low to provide the aforesaid overall drive ratio as a reduction ratio. The final drive units 33, 35 may be of a conventional pinion and wheel type.

The numbers of teeth on the gears 22, 23, 24 and 25 are selected so that the propeller shafts 28, 29 rotate at speeds appropriate to the final drive units 33, 35 and so that during rotation of the epicyclic gearing, the part 21 will remain substantially stationary relative to the part 31. The stationary condition of the part 21 will continue provided that the output members (annulus 22 and sun gear 23) of the epicyclic gearing rotate in synchronism as dictated by the wheels in engagement with the road. However, should wheel slip occur due, say, to loss of traction, synchronism of the propeller shafts 28, 29 will be lost and the part 21 will begin to rotate relative to the part 31. The part 31 is in the form of an arresting device which is then brought into operation to inhibit further movement of the part 21 and the control gear 26 then acts as a reaction sun gear for the planet gears 25. As the planet gears 25 are in mesh with the planet gears 24, the planet gears 24 transmit drive both to the annulus gear 22 and sun gear 23 so that the two rotate in synchronism as before where the control gear was stationary without being physically arrested. Once synchronism has been restored the arresting device operates to release the part 21.

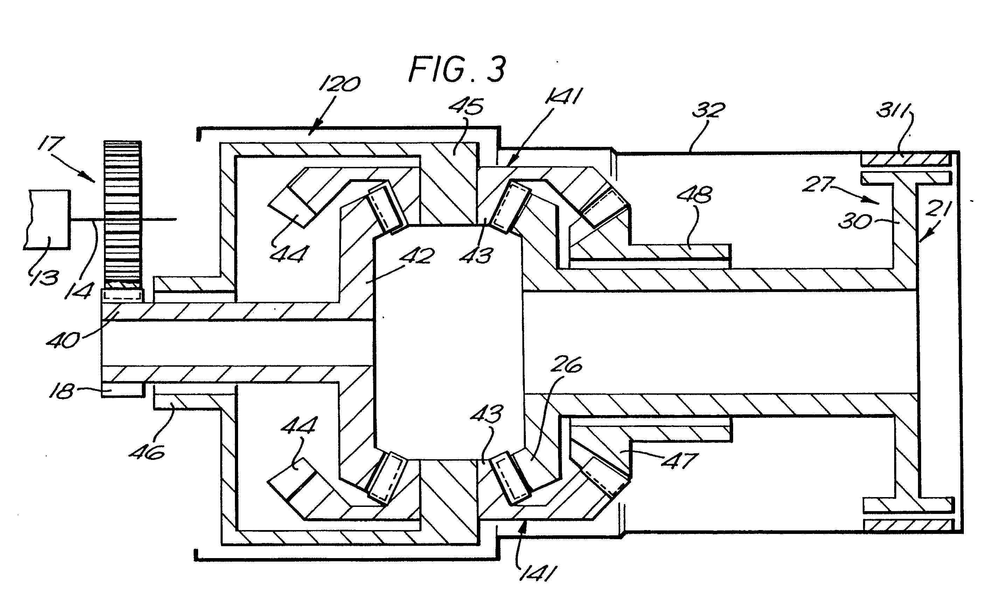

Instead of using an epicyclic gearing where the sun and annulus gears 23, 22 have a common axis with planetary gears 24 rotatable about axes parallel with the common axis as in Figs.1 and 2, a compound planet epicyclic gearing 120 can be used as shown in Fig.3 for driving the final drive units. In Fig.3 parts generally corresponding to parts shown in Figs.1 and 2 have the same reference numerals.

In Fig.3 gear 18 is drivably connected to an input shaft 40 drivably connected to an input bevel gear 42. The bevel gear 42 meshes with first gears 43 each of which is integral with a second gear 44 having a greater number of teeth than the first planet gear so as to form a plurality of compound planet gears 141. The planet gears 141 are mounted on a planet gear carrier 45 for rotation about axes transverse to the rotational axis of gear 42. The planet gear carrier 45 is drivably connected to a first output shaft 46. The output shaft 46 is arranged, e.g., through a gear train and propeller shaft (not shown), to transmit drive to the associated final drive unit (not shown in Fig.3). The gears 44 mesh with an output bevel gear 47 drivably connected to a second output shaft 48. The output shaft 48 is arranged, e.g., through a gear train and propeller shaft (not shown), to transmit drive to the other final drive unit.

The gears 43 mesh with a control gear 26 of a control device 27 including a first part 21 comprising a member 30 drivably connected to the control gear 26 and a second part 31 co-operable therewith mounted on a casing 32.

With the arrangement shown in Fig.3, drive from the input bevel gear 42 with wheels 27, 32 in engagement with the road, causes the planet gear carrier 45 and output bevel gear 47 to rotate relatively in synchronism at different speeds as with the transmission of Figs.1 and 2. The numbers of teeth in the gearing of Fig.3 are selected so as to provide rotational speeds of the shafts 46, 48 which will give the correct rotational speeds for the wheels and so that the part 21 will remain stationary relative to the part 31. However, should wheel slip occur due to loss of traction, substantial loss of rotational synchronism between the planet gear carrier 45 and output bevel gear 47 will occur and the part 21 will begin to rotate relative to part 31. Part 31 can then be operated to inhibit movement of part 21 and the control gear 26 then acts as a reaction sun gear for the planet gears 141. As the planet gears 141 are in mesh with the gears 42, 47, the planet gears 141 transmit drive both to the planet gear carrier 45 and gear 47 so that the two shafts 46, 48 rotate in synchronism as before where the control gear was stationary without being physically arrested. Once synchronism has been restored the arresting device operates to release the part 21.

Preferably, the parts 21, 31 in Figs.1 and 3 comprise parts of a viscous control device such as a viscous coupling which will brake the control gear 26 as it begins to rotate although an alternative form of brake or clutch device may be used for that purpose. Where such an alternative device is used, the onset of rotation of the part 21 may be suitably sensed and the sensed rotation used to activate the brake or clutch to arrest the part 21.

Whilst it is preferred that the part 21 remains in a stationary condition during synchronous rotation of the outputs from the epicyclic gearing, constraints on teeth numbers for the epicyclic gearing may dictate that the part 21 may creep rotationally during drive through the epicyclic gearing. The term "stationary" used herein with reference to part 21 includes rotation at a creep speed. In such a case, the arresting device will be arranged such that the creep rotational speed of the part 21 does not in itself give rise to arresting action. Also in any condition where the net distance travelled by the front wheels is slightly different from that travelled by the rear wheels, e.g., during cornering the transmission will permit differential rotation between shafts 46, 48 to take place without operation of the control device 27 to arrest the control gear 26. Therefore the term "synchronous" and "synchronism" as used herein embraces slight non-synchronous rotation which may arise during normal driving conditions.

Where the part 21 is braked positively to prevent rotation during loss of synchronous rotational output, the epicyclic transmission acts as a fixed two-output gearbox. However, where a viscous coupling is used, the synchronous output will be restored to the extent determined by the characteristics of the viscous coupling.

Where a brake or clutch of a non-viscous coupling type is used, it could be automatically operable to hold and release the part 21 and/or be manually operable. Where part 21 is held locked manually, the transmissions 20, 120 in Figs.1 and 3 will provide a fixed ratio drive to the propeller shafts 28, 29 and shafts 46, 48 respectively with no differential action provided by the transmissions which is particularly suitable for certain off-highway driving conditions.

Whilst specific reference has been made to the use of the transmission in a motor vehicle, the transmission may be used in other applications where synchronous outputs are required.

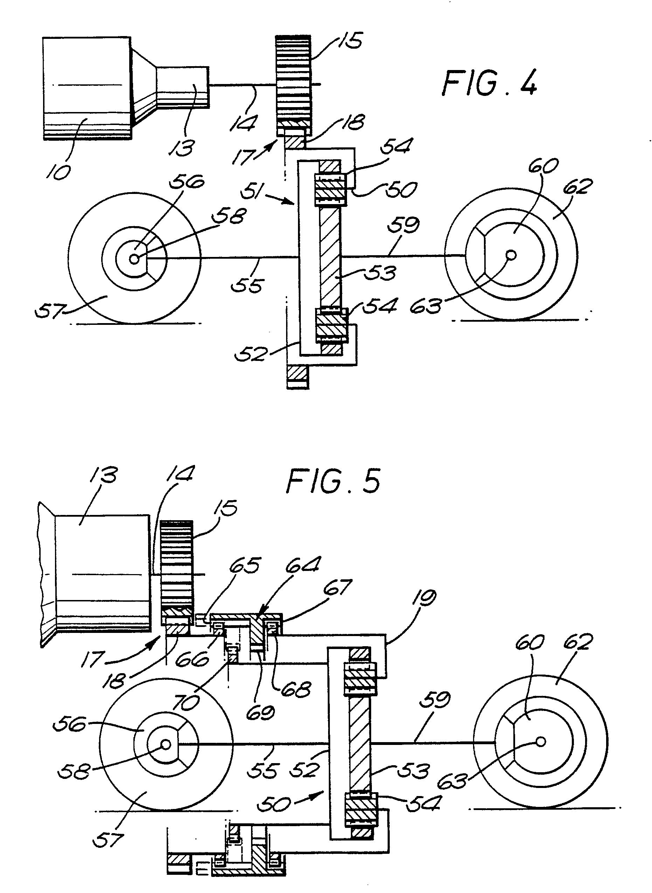

Reference is now made to Fig.4. As in Figs.1 and 3, a vehicle has an engine 10 which transmits drive to a change speed transmission 13. The transmission 13 drives an output shaft 14 which is drivably connected to a gear wheel 15.

The gear 15 meshes with a gear 18 drivably connected to a planet gear carrier 50 of an epicyclic transmission 51. The gears 15, 18 constitute an intermediate transmission 17. The epicyclic transmission 51 includes an annulus gear 52 and a sun gear 53, the annulus and sun gears being in mesh with a number of planet gears 54 rotatably mounted on the planet gear carrier 50.

The annulus gear 52 is drivably connected to a propeller shaft 55 drivably connected to a final drive unit 56 for wheels 57 on a front axle 58. The sun gear 53 is drivably connected to a propeller shaft 59 drivably connected to a final drive unit 60 for wheels 62 on a rear axle 63.

The engine 10, change speed transmission 13 and final drive unit 56 are those which would normally be used in the vehicle to provide a two wheel drive suitable, say for on-highway driving conditions. To enable the same engine 10, change speed transmission 13 and final drive unit 56 to be retained, the final drive unit 60 has a ratio lower than that of the final drive unit 56. The combined effect of the ratios in the final drive unit 56, the epicyclic gearing 51 and the final drive unit 60 is to provide an overall ratio between the change-speed transmission 13 and the wheels 57, 62 lower than that attainable in the original two wheel drive arrangement where the final drive unit 56 was driven directly from the change-speed transmission 13. Normally the effect of the epicyclic gearing 51 is to drive the propeller shaft 59 at an overdrive rate. To compensate for that, the ratio provided in the final drive unit 60 is sufficiently low to provide the aforesaid overall drive ratio as a reduction ratio. The final drive units 56, 60 may be of a conventional pinion and wheel type.

In use, drive from the change speed transmission 13 is transmitted to the epicyclic transmission 51 through the gears 15, 18 which may, if desired, provide an initial reduction drive. Rotation of gear wheel 18 drives the planet gear carrier 50 so as to transmit drive to both the annulus gear 52 and the sun gear 53. As the wheels 57, 62 are in engagement with the road, the road effectively provides a common reaction for the epicyclic transmission 51 thereby permitting drive to be transmitted at one rotational speed through the propeller shaft 55 to the final drive unit 56 and at a different rotational speed to the propeller shaft 59 to the final drive unit 60. The numbers of teeth on the annulus gear 52 and sun gear 53 are selected to provide rotational speeds through propeller shafts 55, 59 which will provide the desired rotational speeds for all the wheels.

In Fig.5, the transmission shown in Fig.4 is modified by the addition of a sliding selector 64 having dogs 65 in constant driving engagement with dogs 66 drivably connected to gear 18 and dogs 67 which can be optionally engaged with or disengaged from dogs 68 drivably connected to the planet gear carrier 50. The selector 64 also includes dogs 69 which can be moved into engagement with dogs 70 drivably connected to the annulus gear 52 after the dogs 67, 68 have been disengaged.

With the selector 64 in the full-line position, drive is transmitted from gear wheel 18 through the selector 64 to the planet gear carrier 19 as in Fig.4 at the overall lower ratio for all-wheel drive.

In the broken line position of the selector 64, drive is transmitted from the gear wheel 18 through the selector 64 directly to the annulus gear 52 for driving the propeller shaft 55 directly. Drive is then transmitted through the final drive unit 56 at a higher ratio as the reduction effect of the epicyclic transmission 52 is no longer applied. The broken line position of the selector 64 thereby selects a ratio appropriate for on-highway use, i.e., the use for which the engine 10, change speed transmission 13 and final drive unit 56 combination were originally designed. In the latter case, the planet gear carrier 50 is allowed to rotate freely and so torque is no longer transmitted to the propeller shaft 59. Therefore, the Fig.5 arrangement provides an optional two wheel or four wheel drive for on-highway or off-highway use. The transmission thus provides a dual ratio range whilst retaining the original engine 10, transmission 13 and final drive unit 56 and will not prejudice the use of anti-lock braking systems.

A transmission in accordance with the invention allows the normal change speed transmission 13 to be used in situations which the physical constraints of the engine 10 and change-speed transmission 13 would not normally permit. Also, the arrangement makes possible a range of wheel sizes and a tyre rolling circumference beyond that which may have been envisaged for that particular engine, and transmission. Moreover, and importantly, the invention makes possible use of standard choices of final drive units which enable the four wheel drive option to be achieved without specially designed units.

Any limitation on ratio imposed by the intermediate transmission 17 may be compensated by appropriate alteration of the ratio provided by the epicyclic gearing.

The transmission 17 can be conveniently bolted to the casing of the change speed transmission 13 at the output end thereof and may take up very little space. The epicyclic gearing 50 can then be located at one side and can be positioned conveniently in the fore and aft direction to permit at least one of the propeller shafts 55, 59 to be of a standard length. However, it is envisaged that the axial length of the epicyclic gearing 51 will be selected and the gearing 51 positioned to enable both propeller shafts 55, 59 to be of standard length.

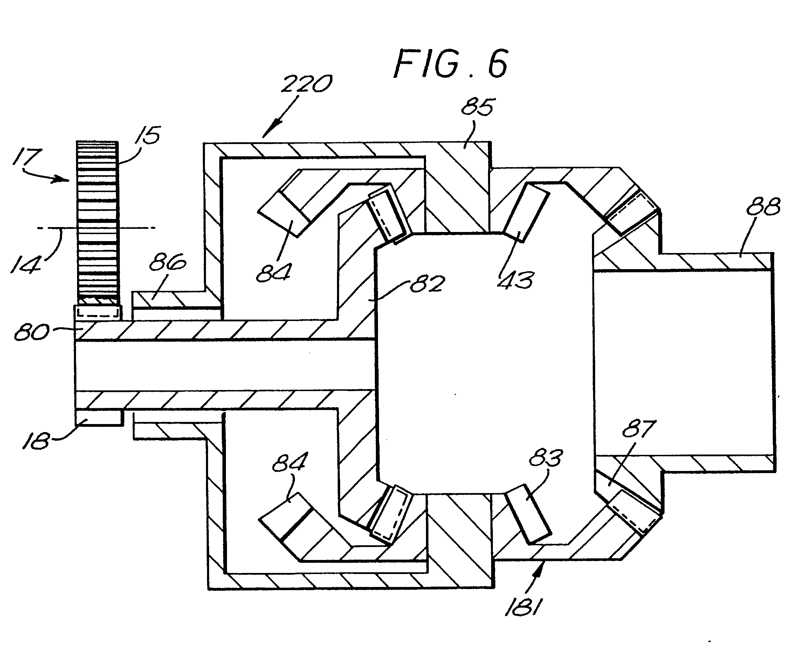

Instead of using an epicyclic gearing where the sun and annulus gears 53, 52 have a common axis with planetary gears 54 rotatable about axes parallel with the common axis as in Figs.4 and 5, a compound bevel epicyclic gearing 220 can be used as shown in Fig.6 for driving the final drive units 56, 60.

In Fig.6, drive input from gear 18 of the intermediate transmission part 17 is transmitted to an input shaft 80 drivably connected to an input bevel gear 82. The bevel gear 82 meshes with first gear 83 of a compound planet, gear 181 having second gear 84. The gear 84 has a greater number of teeth than the first gear 83.

The planet gear 181 is rotatably mounted on a planet gear carrier 85 drivably connected to a first output shaft 86. The output shaft 86 is arranged, e.g., through a gear train and propeller shaft (not shown) to transmit drive to the final drive unit 56 (not shown in Fig.3). The gears 84 mesh with an output bevel gear 87 drivably connected to a second output shaft 88. The output shaft 88 is arranged, e.g. through a gear train and propeller shaft (not shown), to transmit drive to the second final drive unit 60.

With the arrangement shown in Fig.6, drive from the input bevel gear 82 with wheels 57, 62 in engagement with the road, causes the planet gear carrier 85 and output bevel gear 87 to rotate relatively in synchronism at different speeds as with the transmission of Fig.1. The numbers of teeth in the gearing of Fig.6 are selected to provide rotational speeds of the shafts 86, 88 which will provide the correct rotational speeds for the wheels.

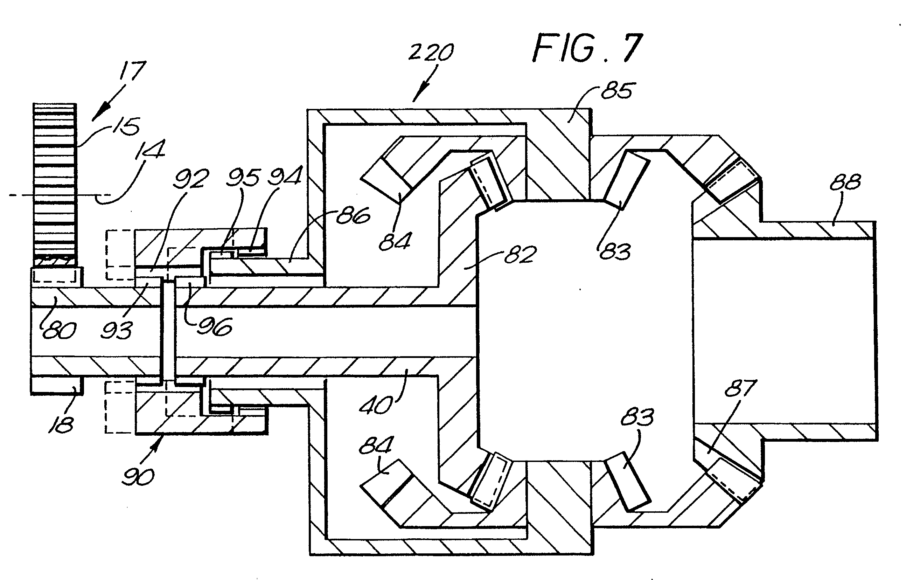

As shown in Fig.7, a sliding selector 90 may be provided between members of the gearing for optionally driving one the shafts 86, alone or both shafts as described above.

The selector 90 has dogs 92 in constant driving engagement with dogs 93 drivably connected to gear 18 and dogs 94 which can be optionally engaged with or disengaged from dogs 95 drivably connected to the output shaft 86. The dogs 92 can be moved into engagement with dogs 96 on the input shaft 80 after the dogs 94, 95 have been disengaged.

With the selector 90 in the full-line position, drive is transmitted from gear wheel 18 through the selector 90 to the input shaft 80. Drive output is then transmitted to output shafts 86, 88 as in Fig.6. In that way an overall reduction ratio is obtained for all-wheel drive.

In the broken line position of the selector 90, drive is transmitted from the gear wheel 18 directly to the output shaft 86. In this case, the gear 82 is allowed to rotate freely and so torque is no longer transmitted to the output shaft 88. Therefore, as with Fig.5, the Fig.7 arrangement provides an optional two wheel or all-wheel drive for on-highway or off-highway use. In the two wheel drive mode drive is transmitted directly to the final drive unit 56 i.e. the use for which the engine 10 and change speed transmission were originally designed.

Where selector 64 or 70 is used in the broken line position any initial reduction ratio provided by the gears 15, 18 will provide a reduction ratio when driving in the two-wheel drive mode.

A similar selector arrangement may also be provided for the epicyclic transmissions of Figs.1 to 3 to provide two wheel and all-wheel drive modes. When driving in two-wheel drive mode it would be necessary to disable the control device 27 to allow free rotation of the part 21.

## Claims

1. A rotary transmission comprising an epicyclic transmission (20; 120) having a drive input member (19; 40) and first and second drive output members (22, 23; 46, 48) for providing rotational outputs, characterised in that the drive output members (22, 23; 46, 48) rotate in synchronism and a control device (27) is provided including a first part (21) drivable by the epicyclic transmission (20; 120) and which remains in a first operative condition during synchronous rotation of the output members (22, 23; 46, 48) and changes to a different operative condition where loss of synchronism or substantial loss of synchronism occurs, and a second part (31) for controlling the first part (21) to enable the synchronous rotation of the outputs to be restored, the first part (21) of the control device (27) including a control gear (26) which meshes with a gear (25; 43) of the epicyclic transmission (20; 120).

2. A rotary transmission according to Claim 1 characterised in that the control gear (26) meshes with a planet gear (25; 43) of the epicyclic transmission.

3. A rotary transmission according to Claim 2 characterised in that the planet gear (25) in mesh with the control gear (26) meshes with a further planet gear (24) in mesh with a sun gear (23) and an annulus gear (22) of the epicyclic gearing.

4. A rotary transmission according to Claim 1 or 2 characterised in that the epicyclic gearing (120) is of a compound planet gear type in which the compound planet gear (141 ) has an axis of rotation transverse to the axis of rotation of a gear (42) in mesh therewith.

5. A rotary transmission according to Claim 4 characterised in that the control gear (26) meshes with one of the gears (43) of the compound planet gear (141).

6. A rotary transmission according to any preceding Claim characterised in that the control gear (26) is coaxial with an output member (23, 48) of the epicyclic transmission (20; 120).

7. A rotary transmission according to any preceding Claim characterised in that the first operative condition of the first part (21) of the control device (27) is a substantially non-rotating condition.

8. A rotary transmission according to any preceding Claim characterised in that in the second operative condition of the first part (21) of the control device is a rotating condition.

9. A rotary transmission according to any preceding Claim characterised in that the second part (31) of the control device (27) is a brake, clutch, viscous control device or other arresting means.

10. A rotary transmission according to any preceding Claim characterised in that the second part of the control device (27) is mounted on a casing (32) for the epicyclic gearing (20; 120).

11. A rotary transmission according to any preceding Claim characterised in that the control gear (26) is drivably connected to a member (30) which is co-operable with the second part (31) of the control device (27).

EP 0 405 717 A1

FIG.1

FIG.2

FIG. 3

FIG.4

FIG.5

FIG. 6

FIG. 7

EP 0 405 717 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-C-3507490 (PORSCHE)<br>* column 3, line 46 - column 4, line 18; claims 5, 6, 8; figure 2 * | 1, 6-9, 11 | B60K17/346<br>F16H1/44 |
| A | | 2, 3, 10 | |
| X | WO-A-8707348 (BORGUDD)<br>* page 2, line 28 - page 3, line 11 * | 1, 2, 6, 9-11 | |
| A | * page 3, lines 22 - 25 *<br>* page 6, lines 10 - 16 *<br>* page 8, lines 6 - 9 *<br>* page 8, line 34 - page 9, line 7 *<br>* claim 6; figures 3, 8 * | 2-5 | |

TECHNICAL FIELDS
SEARCHED (Int. Cl.5 )

B60K
F16H

The present search report has been drawn up for all claims

| Place of search | Date of completion of the search | Examiner |
|---|---|---|
| THE HAGUE | 09 OCTOBER 1990 | TOPP-BORN S. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.....................................................................................................
& : member of the same patent family, corresponding
    document

EPO FORM 1503 03.82 (P0401)